Europäisches Patentamt

European Patent Office

Office européen des brevets

(11) Veröffentlichungsnummer: **0 257 618**
**A1**

(12) **EUROPÄISCHE PATENTANMELDUNG**

(21) Anmeldenummer: 87112304.8

(51) Int. Cl.⁴: **A01G 9/24** , A01G 9/14

(22) Anmeldetag: 25.08.87

(30) Priorität: 25.08.86 DE 8622404 U

(43) Veröffentlichungstag der Anmeldung:
02.03.88 Patentblatt 88/09

(84) Benannte Vertragsstaaten:
AT BE CH DE ES FR GB GR IT LI NL SE

(71) Anmelder: **Diwald, Hans**
**Hadwigstrasse 21**
**D-7700 Singen(DE)**

(72) Erfinder: **Diwald, Hans**
**Hadwigstrasse 21**
**D-7700 Singen(DE)**

(74) Vertreter: **Weiss, Peter, Dr.**
**WEISS & OTT Schlachthausstrasse 1**
**Postfach 466**
**D-7700 Singen a.H.(DE)**

(54) **Gewächshaus.**

(57) Bei einem Gewächshaus mit einem, Seitenwände überspannende Dach aus in Länsrichtung des Gewächshauses versetzt angeordneten Tragprofilen (6), welche von einer Dachhaut (7) überspannt und mit inneren Folienstreifen (9) verbunden sind, sind beidseits des Tragprofils (6) querschnittlich M-förmige Kanäle (14) ausgeformt. Durch Profilstreifen (16) sind seitlich an diese Kanäle Nuten (17) ausgebildet, welche einen dem Folienstreifen (9) seitlich angeformten Keder (19) aufnehmen.

Fig. 2

EP 0 257 618 A1

## Gewächshaus

Die Erfindung betrifft ein Gewächshaus mit einem, Seitenwände überspannenden Dach aus in Längsrichtung des Gewächshauses versetzt angeordneten Tragprofilen, welche von einer Dachhaut überspannt und mit inneren Folienstreifen verbunden sind, wobei das Tragprofil querschnittlich M-förmig mit beidseits gebildeten Kanälen ausgeformt ist.

Ein derartiges Gewächshaus ist beispielsweise aus der Europäischen Patentanmeldung 106 899 bekannt. Die dort vorgesehenen als Trägerelemente ausgebildeten Tragprofile des Gebäudes dienen zum gemeinsamen und/oder separaten Frei-oder Zwangsströmen von einem oder mehreren gleichen oder verschiedenen Mitteln, zweckmäßig Luft, Wasser, Thermalwasser, Schichtwasser, Gas, Abwärme od. dgl.. Dabei wird Luft von der Seite zwischen Dachhaut und Innenhaut eingeführt, das Wasser gelangt über besondere Rohrleitungen zu den Tragprofilen. Dies hat sich als umständlich und nicht sehr wirkungsvoll erwiesen.

Weiterhin dienen die Tragprofile dem Festlegen der Innenhaut, wobei die Innenhaut mittels in Kanälen des Tragprofils eingelegten Drähten verspannt wird. Hierzu wird die Innenhaut um den Draht gelegt und ihre freie Randkante aus dem Kanal herausgezogen und von Hand gespannt bzw. nachgespannt. Diese Befestigung ist äußerst kompliziert und zeitaufwendig. Zudem hängen die freien Randbereiche der Innenhautstreifen als Lappen in den Innenraum des Gewächshauses, was sehr unansehnlich ist.

Der Erfinder hat sich zum Ziel gesetzt, diese Nachteile zu beseitigen, das Einführen von Medien in das Gewächshaus zu erleichtern und den Aufbau des Gewächshauses sowie nachträgliche Veränderungen zu verbessern.

Zur Lösung dieser Aufgabe führt, daß seitlich an den Kanälen durch Profilstreifen eine Nut ausgebildet ist, welche einen dem Folienstreifen seitlich angeformten Keder aufnimmt.

Auf diese Weise läßt sich die Innenfolie leicht mit den Tragprofilen verbinden. Der Keder wird von oben beidseits in die Nut eingeschoben und entlang der Nut geführt. Auf diese Weise wird die Innenfolie von oben nach unten eingezogen, was den Arbeitsvorgang erheblich erleichtert.

Besonders erleichtert ist das Einführen des Keders in die Nut, wenn diese im oberen Bereich des kuppelförmigen Daches endet. Dadurch wird ein Bereich freigehalten, in welchem der Folienstreifen nicht mit dem Tragprofil verbunden ist. In diesem Bereich bildet sich ein Schacht aus, in dem zum einen gewünschte Warm-oder Kaltluft einführbar ist, über den aber auch das Gewächshaus entlüftet werden kann. Weiterhin kann der Schacht der Aufnahme von Zusatzaggregaten dienen, wie beispielsweise einer Wasserleitung, die dann direkt Wasser in die Tragprofile bzw. in dort gebildete Kanäle einführt.

Spalte, die sich zwischen den einzelnen Folienstreifen im Bereich der Tragprofile bilden, werden durch die Folienstreifen miteinander verbindende Leisten überbrückt.

Dieser Schacht bringt eine erhebliche Kosteneinsparung und geringeren Aufwand an Aufbauzeit mit sich, da der bekannte, seitlich angeordnete technische Aufwand an Luftpumpen, Gebläsen und Luftrohren entfällt. So ist seitlich nur noch eine Abflußrinne vorgesehen, über welche die Außenhaut gezogen und im Bereich von Seitenstreben mittels eines Schnappverschlusses od. dgl. gespannt wird. Das Tragprofil und die Folienstreifen enden direkt in der Abflußrinne. Durch das M-förmige Profil wird weiterhin ein Innenkanal gebildet, durch den ein ungehinderter Luftstrom vom Schacht in das Gewächshaus gewährleistet ist, ohne daß Luftturbulenzen auftreten.

Erfindungsgemäß sind zum Spannen der Folienstreifen um das M-förmige Profil herum Klemmbügel vorgesehen. Mit diesen Klemmbügeln kann die lichte Weite eines von dem Tragprofil gebildeten Innenkanals verengt und dadurch der Folienstreifen gespannt werden. Dieses Spannen geschieht sowohl nach dem erstmaligen Einführen der Keder in die Nut, kann aber auch jederzeit zu einem späteren Zeitpunkt vorgenommen werden. Hängen beispielsweise die Folienstreifen im Laufe der Zeit durch, so brauchen nur die Klemmbügel angezogen und damit der Folienstreifen gespannt zu werden.

Eine einfache Ausführungsform eines Klemmbügels besteht aus zwei Schenkeln, welche über einen Gewindebolzen miteinander verbunden sind. Beispielsweise kann der Gewindebolzen mit einem Schenkel fest verbunden sein, während er den anderen Schenkel durchgreift und dort von einer Flügelschraube festlegbar bzw. anspannbar ist.

Im übrigen kann ein erstmaliges Spannen auch mit Hilfe einer Klauenzange erfolgen, mit der das Tragprofil in gewünschtem Ausmaß zusammengepreßt un dann mit dem Klemmbügel gehalten wird.

Diese Verbesserungen haben sich in der Praxis als vorteilhaft bezüglich des Aufbaus und auch der weiteren Wartung eines Gewächshauses erwiesen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1 einen schematisch dargestellten Querschnitt durch ein Gewächshaus;

Fig. 2 einen vergrößert dargestellten Querschnitt durch das Dach des Gewächshauses nach Fig. 1 entlang Linie II-II.

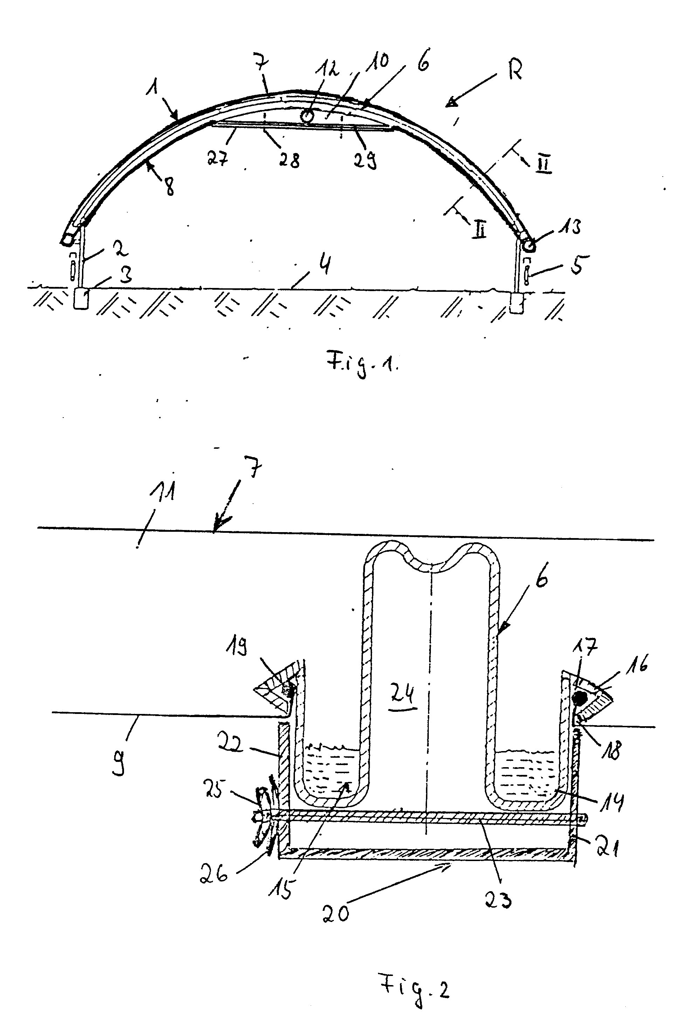

Ein Gewächshaus R besteht gemäß Fig. 1 aus einem Dach 1, welches von Seitenstreben 2 gehalten wird, die mit einem Betonsockel 3 in einem Boden 4 verankert sind. Eine Seitenbelüftung 5 ist nur - schematisch dargestellt.

Das Dach 1 besteht im wesentlichen aus in der Längsrichtung des Gewächshauses R versetzt angeordneten Tragprofilen 6, welche im vorliegenden Ausführungsbeispiel dem Gewächshaus R eine kuppelförmige Gestalt geben. Die Tragprofile 6 sind in Fig. 2 näher dargestellt. Sie werden von einer äußeren Dachhaut, beispielsweise einer Kunststoff-Folie überspannt, welche das gesamte Gewächshaus R gegen äußere Witterungseinflüsse schützt. Im Inneren sind als Innenhaut 8 Folienstreifen 9 vorgesehen, welche nebeneinanderliegende Tragprofile 6 verbinden.

Im oberen Bereich des kuppelförmigen Dachs 1 ist diese Verbindung zwischen Folienstreifen 9 und Tragprofilen 6 jedoch aufgelöst, so daß sich ein Schacht 10 ausbildet, der beispielsweise der Lüftung des Raumes 11 zwischen Dachhaut 7 und Folienstreifen 9 dient. Der offene Spalt zwischen zwei Folienstreifen 9 im Bereich des Tragprofils 6 wird durch eine Abdeckleiste 27, vorzugsweise aus Aluminium, abgedichtet. Diese Abdeckleiste 27 kann mittels Befestigungselementen 28 mit einer Gegenleiste 29 verbunden sein.

In diesem Schacht 10 kann auch eine Wasserleitung 12 angeordnet werden, über die Wasser in die Tragprofile 6 eingesprüht wird. Hierdurch kann im Sommer durch Einbringen von kaltem Wasser eine Kühlung und im Winter durch Einbringen von warmem Wasser eine Erwärmung des Daches 1 bzw. des Gewächshauses R erfolgen. Durch diese Maßnahme entfällt auch eine gesonderte Anordnung von seitlichen Luftrohren, mit denen Warm-bzw. Kaltluft in den Raum 11 eingeführt wurde. Anstelle dieses Luftrohres wird eine Wasserrinne 13 vorgesehen, über welche die Dachhaut 7 gezogen und unterhalb der Wasserrinne 13 an den Seitenstreben 2 mit nicht näher dargestellten verstellbaren Spannungshebeln befestigt wird.

Nach Fig. 2 weist das Tragprofil 6 einen M-förmigen Querschnitt auf, wobei seitlich zwei Kanäle 14 zum Führen von Wasser 15 ausgebildet sind.

Beidseits der Kanäle 14 umschließen Profilstreifen 16 eine Nut 17 und lassen eine Nutöffnung 18 frei. In diese Nut 17 wird der Folienstreifen 9 mit einem randseitigen Keder 19 eingeführt.

Die beidseitigen Kanäle 14 umschließt ein U-förmiger Klemmbügel 20, dessen beide Schenkel 21 und 22 über einen Gewindebolzen miteinander verbunden sind. Über diesen Gewindebolzen kann die lichte Weite der Schenkel 21 und 22 verändert und so das Tragprofil 6 eingeklemmt werden. Da dieses Tragprofil 6 einen in seiner lichten Weite veränderbaren Innenkanal 24 aufweist, ist es möglich, die Folienstreifen 9 zu spannen.

Zum Verändern der lichten Weite zwischen den beiden Schenkeln 21 und 22 dient nach dem Ausführungsbeispiel nach Fig. 2 eine dem Gewindebolzen 23 aufgesetzte Flügelschraube 25 mit Unterlegscheibe 26. Den Schenkel 21 kann dabei der Gewindebolzen 23 entweder mit einem Gewinde durchsetzen oder aber an ihm festgelegt sein.

# DR. WEISS

DR. RER. NAT. PETER H. WEISS
PATENTANWALT
SCHLACHTHAUSSTRASSE 1
D-7700 SINGEN

POSTFACH 466
D-7700 SINGEN
TELEPHON: (07731) 677 55
TELEGRAMM: HEGAU PATENT
TELEX: 793763 WEIS D
TELEKOPIERER:
07731-68215 (GRUPPE 2+3)

## PATENTANWALT
## EUROPEAN PATENT ATTORNEY

Aktenzeichen: G 149.16/86          Datum: 12.08.1986

## P O S I T I O N S Z A H L E N L I S T E

| Nr. | Bezeichnung | Nr. | | | R | Gewächshaus |
|---|---|---|---|---|---|---|
| 1 | Dach | 34 | | | | |
| 2 | Seitenstreben | 35 | | | | |
| 3 | Betonsockel | 36 | | | | |
| 4 | Boden | 37 | | | | |
| 5 | Seitenbelüftung | 38 | | | | |
| 6 | Tragprofile | 39 | | | | |
| 7 | Dachhaut | 40 | | | | |
| 8 | Innenhaut | 41 | | | | |
| 9 | Folienstreifen | 42 | | | | |
| 10 | Schacht | 43 | | | | |
| 11 | Raum | 44 | | | | |
| 12 | Wasserleitung | 45 | | | | |
| 13 | Wasserrinne | 46 | | | | |
| 14 | Kanäle | 47 | | | | |
| 15 | Wasser | 48 | | | | |
| 16 | Profilstreifen | 49 | | | | |
| 17 | Nut | 50 | | | | |
| 18 | Nutöffnung | 51 | | | | |
| 19 | Keder | 52 | | | | |
| 20 | Klemmbügel | 53 | | | | |
| 21 | Schenkel | 54 | | | | |
| 22 | Schenkel | 55 | | | | |
| 23 | Gewindebolzen | 56 | | | | |
| 24 | Innenkanal | 57 | | | | |
| 25 | Flügelschraube | 58 | | | R | Gewächshaus |
| 26 | Unterlegscheibe | 59 | | | | |
| 27 | Abdeckleiste | 60 | | | | |
| 28 | Befestigungselemente | 61 | | | | |
| 29 | Gegenleiste | 62 | | | | |
| 30 | | 63 | | | | |
| 31 | | 64 | | | | |
| 32 | | 65 | | | | |
| 33 | | 66 | | | | |

**Ansprüche**

1. Gewächshaus mit einem, Seitenwände überspannenden Dach aus in Längsrichtung des Gewächshauses versetzt angeordneten Tragprofilen, welche von einer Dachhaut überspannt und mit inneren Folienstreifen verbunden sind, wobei das Tragprofil querschnittlich M-förmig mit beidseits gebildeten Kanälen ausgeformt ist,

dadurch gekennzeichnet,

daß seitlich an den Kanälen (14) durch Profilstreifen (16) eine Nut (17) ausgebildet ist, welche einen dem Folienstreifen (9) seitlich angeformten Keder (19) aufnimmt.

2. Gewächshaus nach Anspruch 1, dadurch gekennzeichnet, daß die Folienstreifen (9) im oberen Bereich des kuppelförmigen Daches (7) aus der Nut (17) austreten und so einen Schacht (10) zwischen Folienstreifen (9) und Dachhaut (7) ausbilden.

3. Gewächshaus nach Anspruch 2, dadurch gekennzeichnet, daß in den Schacht (10) über ein Gebläse od.dgl. Warm-oder Kaltluft einführbar ist bzw. der Schacht und damit das Gewächshaus entlüftbar ist.

4. Gewächshaus nach Anspruch 2 oder 3, dadurch gekennzeichnet, daß in dem Schacht (10) zumindest eine Wasserleitung (12) zum Einbringen von Wasser in die Kanäle (14) vorgesehen ist.

5. Gewächshaus nach wenigstens einem der Ansprüche 1 bis 4, dadurch gekennzeichnet, daß um das M-förmige Profil (6) Klemmbügel (20) angeordnet sind.

6. Gewächshaus nach Anspruch 5, dadurch gekennzeichnet, daß jeder Klemmbügel (20) mit beidseitigen Schenkeln (21,22) das Tragprofil (6) umgreift und einen vom Tragprofil (6) ausgebildeten Innenkanal (24) verengt.

7. Gewächshaus nach Anspruch 6, dadurch gekennzeichnet, daß beide Schenkel (21,22) über einen Gewindebolzen (23) miteinander verbunden sind, der zumindest einerseits mit einer Flügelschraube (25) od.dgl. belegt ist.

0 257 618

Fig. 1.

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 012 996 (LAMM) <br> * Seite 7, letzter Absatz; Seite 11, letzter Absatz - Seite 12, Absatz 1; Figuren 3,7 * <br> --- | 1 | A 01 G 9/24 <br> A 01 G 9/14 |
| A | FR-A-1 459 674 (BRUSCHI) <br> * Seite 1, rechte Spalte, Absatz 5 - Seite 3, Absatz 1; Figuren 1-10 * <br> --- | 1,5,6 | |
| A | GB-A-1 366 637 (DENNIS) <br> * Seite 1, Zeilen 8-26; Seite 4, Zeilen 72-120; Figur 20 * <br> ----- | 1 | |

**RECHERCHIERTE SACHGEBIETE (Int. Cl.4)**

A 01 G
E 04 H

Der vorliegende Recherchenbericht wurde für alle Patentansprüche erstellt

| Recherchenort | Abschlußdatum der Recherche | Prüfer |
|---|---|---|
| DEN HAAG | 20-11-1987 | HERYGERS J.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)